# EUROPÄISCHE PATENTSCHRIFT

(11) **EP 3 338 941 B1**
(45) Veröffentlichungstag und Bekanntmachung des Hinweises auf die Patenterteilung: **10.08.2022**
(21) Anmeldenummer: 17209227.2
(22) Anmeldetag: 21.12.2017
(51) Int. Cl.: B23Q 7/02, B23B 3/06, B23Q 7/04, B23Q 7/10

(54) **RUNDTAKTMASCHINE**
REVOLVING MACHINE
MACHINE À TRANSFERT ROTATIF

(30) Priorität: 21.12.2016 DE 102016125237
(43) Veröffentlichungstag der Anmeldung: 27.06.2018
(73) Patentinhaber: Winema Maschinenbau GmbH, 72415 Grosselfingen (DE)
(72) Erfinder: NETH, Eckhard, 72406 Bisingen (DE)
(74) Vertreter: Daub, Thomas

(56) Entgegenhaltungen:
- EP-A1- 2 033 735
- JP-U- H0 553 803

## Beschreibung

### Stand der Technik

Die Erfindung betrifft eine Rundtaktmaschine sowie ein Verfahren zu einem Betrieb einer Rundtaktmaschine.

Es ist bereits eine Rundtaktmaschine mit zumindest einem Taktteller, welcher in zumindest einem Betriebszustand zu einer Aufnahme und einem Transport zumindest eines Werkstücks vorgesehen ist, und mit zumindest einer Taktzelle, welche zumindest eine Aufnahmeeinheit mit zumindest zwei gegenüberliegenden Aufnahmeelementen, welche zu einer gemeinsamen Aufnahme des zumindest einen Werkstücks aus dem Taktteller vorgesehen sind, und zumindest eine Bearbeitungseinheit zu einer Bearbeitung des mittels der Aufnahmeeinheit aufgenommenen Werkstücks aufweist, vorgeschlagen worden.

Insbesondere ist aus der JP H05 53803 U bereits eine Maschine mit zumindest einem Taktteller, welcher in zumindest einem Betriebszustand zu einer Aufnahme und einem Transport zumindest eines Werkstücks vorgesehen ist, und mit zumindest einer Taktzelle, welche zumindest eine Aufnahmeeinheit mit zumindest zwei gegenüberliegenden Aufnahmeelementen, welche zu einer gemeinsamen Aufnahme des zumindest einen Werkstücks aus dem Taktteller vorgesehen sind, und zumindest eine Bearbeitungseinheit zu einer Bearbeitung des mittels der Aufnahmeeinheit aufgenommenen Werkstücks aufweist, bekannt.

Die Aufgabe der Erfindung besteht insbesondere darin, eine gattungsgemäße Vorrichtung mit verbesserten Eigenschaften hinsichtlich einer Präzision sowie einer Bearbeitbarkeit der Werkstücke bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Rundtaktmaschine mit zumindest einem Taktteller, welcher in zumindest einem Betriebszustand zu einer Aufnahme und einem Transport zumindest eines Werkstücks vorgesehen ist, und mit zumindest einer Taktzelle, welche zumindest eine Aufnahmeeinheit mit zumindest zwei gegenüberliegenden Aufnahmeelemente, welche zu einer gemeinsamen Aufnahme des zumindest einen Werkstücks aus dem Taktteller vorgesehen sind, und zumindest eine Bearbeitungseinheit zu einer Bearbeitung des mittels der Aufnahmeeinheit aufgenommenen Werkstücks aufweist.

Es wird vorgeschlagen, dass die zumindest eine Taktzelle zumindest eine, sich in axialer Richtung zumindest teilweise über den Taktteller hinweg erstreckende Brückeneinheit aufweist, welche dazu vorgesehen ist, die zumindest zwei Aufnahmeelemente der Aufnahmeeinheit in einem gemeinsamen Koordinatensystem zu führen, wobei die Bearbeitungseinheit an der Brückeneinheit angeordnet ist. Vorzugsweise ist die Brückeneinheit dazu vorgesehen, die zumindest zwei Aufnahmeelemente in Führungen zu führen. Bevorzugt sind die Führungen der zumindest zwei Aufnahmeelemente der Brückeneinheit definiert relativ zueinander ausgerichtet. Besonders bevorzugt ist das Koordinatensystem der Brückeneinheit verschieden von einem Koordinatensystem des Takttellers der Rundtaktmaschine. Unter einer "Rundtaktmaschine" soll in diesem Zusammenhang insbesondere eine Maschine, vorzugsweise eine Werkzeugmaschine, mit zumindest einem Taktteller verstanden werden, in welchem in zumindest einem Betriebszustand zumindest ein Werkstück, insbesondere mehrere Werkstücke, eingespannt sind. Vorzugsweise soll darunter insbesondere eine Maschine mit mehreren Bearbeitungsstationen, insbesondere Taktzellen, zu einer Bearbeitung des zumindest einen Werkstücks verstanden werden. Bevorzugt wird das Werkstück mittels des Takttellers von Bearbeitungsstation zu Bearbeitungsstation transportiert. Besonders bevorzugt sind die Bearbeitungsstationen kreisförmig um den Taktteller angeordnet. Vorzugweise weist die Maschine zudem zumindest eine Zuführeinheit zu einer Bestückung des Takttellers und zumindest eine Entnahmeeinheit zu einer Entnahme der bearbeiteten Werkstücke aus dem Taktteller. Rundtaktmaschinen sind auch unter den Namen Schalttrommelmaschinen oder Rundtransfermaschinen bekannt. Ferner soll in diesem Zusammenhang unter einem "Taktteller" insbesondere eine vorzugsweise zumindest teilweise kreisförmige Werkstückaufnahme verstanden werden, welche zu einer Aufnahme und einem Transport von Werkstücken vorgesehen ist. Vorzugsweise soll darunter insbesondere eine drehbar antreibbare Werkstückaufnahme verstanden werden, welche dazu vorgesehen ist, die Werkstücke von einer Taktzelle zur nächsten Taktzelle zu bewegen. Bevorzugt umfasst der Taktteller zumindest eine, vorzugweise an einem Umfang des Takttellers angeordnete, Greifeinheit, welche zu einer direkten Aufnahme eines Werkstücks vorgesehen ist. Besonders bevorzugt umfasst der Taktteller mehrere, vorzugsweise in Umfangsrichtung gleichmäßig verteilte, Greifeinheiten. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Des Weiteren soll in diesem Zusammenhang unter einer "Taktzelle" insbesondere eine Bearbeitungszelle der Rundtaktmaschine verstanden werden, welche zu einer taktweisen Bearbeitung eines Werkstücks vorgesehen ist. Vorzugsweise ist die Taktzelle dazu vorgesehen, pro Takt ein Werkstück zu bearbeiten. Bevorzugt ist die Taktzelle dazu vorgesehen, jeweils einen Bearbeitungsschritt der Rundtaktmaschine durchzuführen. Dabei sind verschiedene, einem Fachmann als sinnvoll erscheinende Bearbeitungsschritte denkbar, wie beispielsweise Bohren, Fräsen, Drehen, Reiben, Schleifen, Sägen, Trennen und/oder andere, insbesondere zerspanende, spanende oder zerteilende Fertigungsverfahren. Unter einer "Aufnahmeeinheit" soll in diesem Zusammenhang insbesondere eine Einheit verstanden werden, welche zu einer insbesondere temporären Entnahme eines Werkstücks aus dem Taktteller vorgesehen ist. Vorzugsweise soll darunter insbesondere eine Einheit verstanden werden, welche zu einer Bearbeitung eines Werkstücks durch die Taktzelle dazu vorgesehen ist, ein Werkstück temporär aus dem Taktteller zu entnehmen. Besonders bevorzugt ist die Einheit dazu vorgesehen, während eines Takts der Rundtaktmaschine ein Werkstück für eine Bearbeitung aus dem Taktteller zu entnehmen und nach einer Bearbeitung wieder in den Taktteller einzusetzen. Darunter, dass "die zwei gegenüberliegenden Aufnahmeelemente zu einer gemeinsamen Aufnahme des zumindest einen Werkstücks aus dem Taktteller vorgesehen sind", soll in diesem Zusammenhang insbesondere verstanden werden, dass die Aufnahmeelemente zu einer gemeinsamen, insbesondere zeitgleichen, Aufnahme des zumindest einen Werkstücks vorgesehen sind. Vorzugsweise sind die Aufnahmeelemente dazu vorgesehen, das zumindest eine Werkstück aus gegenüberliegenden Richtungen zu greifen und zwischen sich einzuspannen. Vorzugsweise wird das zumindest eine Werkstück zu einer Aufnahme zwischen den zwei gegenüberliegenden Aufnahmeelementen eingespannt. Vorzugsweise weisen die Aufnahmeelemente jeweils ein Zentrierelement, insbesondere ein Zentrierdorn, auf, welches dazu vorgesehen ist, zu einer Aufnahme mit einem Zentrierelement, insbesondere mit einer Zentrierbohrung, des zumindest einen Werkstücks zusammenzuwirken, insbesondere einzugreifen. Unter einer "Bearbeitungseinheit" soll in diesem Zusammenhang insbesondere eine Einheit der Taktzelle verstanden werden, welche zu einer direkten Bearbeitung des aufgenommenen Werkstücks vorgesehen ist. Vorzugsweise umfasst die Bearbeitungseinheit zumindest ein Bearbeitungswerkzeug zu einer Bearbeitung des Werkstücks. Grundsätzlich kann die Bearbeitungseinheit auch mehrere Bearbeitungswerkzeuge umfassen. Bevorzugt ist die Bearbeitungseinheit insbesondere zu einer zerspanenden, einer spanenden und/oder zerteilenden Bearbeitung des zumindest einen Werkstücks vorgesehen. Besonders bevorzugt findet eine Bearbeitung des Werkstücks durch die Bearbeitungseinheit während eines Takts der Bearbeitungsmaschine statt. Es sind verschiedene, einem Fachmann als sinnvoll erscheinende Bearbeitungswerkzeuge denkbar, wie beispielsweise Bohrer, Fräßen, Trennscheiben und/oder Drehmeißel. Ferner soll in diesem Zusammenhang unter einer "Brückeneinheit" insbesondere eine eigensteife Einheit verstanden werden, welche als tragender Rahmen der Taktzelle dient. Vorzugsweise soll darunter insbesondere ein zumindest im Wesentlichen verformungsfrei die Aufnahmeeinheit und die Bearbeitungseinheit der Taktzelle tragender Rahmen verstanden werden. Vorzugsweise ist die Brückeneinheit von einer tragenden Struktur der Rundtaktmaschine verschieden ausgebildet. Besonders bevorzugt ist die Taktzelle mittels der Brückeneinheit selbsttragend ausgebildet. Dabei soll unter "zumindest im Wesentlichen verformungsfrei" insbesondere verstanden werden, dass die Taktzelle in einem theoretisch einseitig gelagerten Zustand über eine gesamte Erstreckung, insbesondere aufgrund von Biegebeanspruchung, eine vertikale Verbiegung von maximal 0,25 mm, vorzugsweise von maximal 0,03 mm, bevorzugt von maximal 0,01 mm und besonders bevorzugt von maximal 0,005 mm erfährt. Darunter, dass "sich die Brückeneinheit in axialer Richtung zumindest teilweise über den Taktteller hinweg erstreckt", soll in diesem Zusammenhang insbesondere verstanden werden, dass die Brückeneinheit zumindest teilweise radial neben dem Taktteller angeordnet ist. Vorzugsweise soll darunter insbesondere verstanden werden, dass sich die Brückeneinheit entlang einer Rotationsachse des Takttellers betrachtet, zumindest teilweise, insbesondere vollständig, über eine axiale Erstreckung des Takttellers hinweg erstreckt. Bevorzugt übergreift die Brückeneinheit den Taktteller in axialer Richtung. Darunter, dass "die Brückeneinheit dazu vorgesehen ist, die zumindest zwei Aufnahmeelemente der Aufnahmeeinheit in einem gemeinsamen Koordinatensystem zu führen", soll in diesem Zusammenhang insbesondere verstanden werden, dass die Brückeneinheit zumindest zwei Führungen für die Aufnahmeelemente aufweist, dessen Positionen über ein gemeinsames Koordinatensystem, insbesondere der Brückeneinheit, definiert sind. Vorzugsweise soll darunter insbesondere verstanden werden, dass die zumindest zwei Aufnahmeelemente unabhängig von einer Position innerhalb der Rundtaktmaschine über die Brückeneinheit definiert relativ zueinander positioniert sind. Bevorzugt sind die zumindest zwei Aufnahmeelemente unabhängig von einer Position innerhalb der Rundtaktmaschine über die Brückeneinheit definiert relativ zueinander bewegbar.

Durch die erfindungsgemäße Ausgestaltung der Rundtaktmaschine kann insbesondere eine Rundtaktmaschine mit einer vorteilhaft präzisen Taktzelle, bei welcher das Werkstück aufgenommen wird, bereitgestellt werden. Vorzugsweise kann dadurch insbesondere eine vorteilhaft einfache und zuverlässige Bearbeitbarkeit des aufgenommenen Werkstücks erreicht werden. Es kann insbesondere erreicht werden, dass eine Position des Werkstücks innerhalb der Taktzelle bekannt und sichergestellt werden kann. Hierdurch kann eine vorteilhaft präzise Bearbeitung ermöglicht werden. Vorzugsweise ermöglicht das Koordinatensystem unabhängig von den geometrisch-, thermisch-, oder vibrationsbedingten Fehlern des Koordinatensystems des Takttellers eine präzise Bearbeitung des Werkstücks. Es kann insbesondere erreicht werden, dass ein insbesondere rotationssymmetrisches Werkstück auf ganzer Länge oder in dem Bereich, der zum festspannen in dem Taktteller benötigt wird und daher in dem Taktteller nicht zur Bearbeitung freiliegt, bearbeitet werden kann. Ferner kann mittels der Taktzelle insbesondere rotationssymmetrischer Bereich derart bearbeitet, insbesondere drehbearbeitet werden, sodass dieser einen vorteilhaft genauen Rundlauf- und/oder Koaxialitätsanforderung hat, die im fest eingespannten Zustand nicht erreichbar ist. Ferner wird vorgeschlagen, dass die zumindest eine Brückeneinheit dazu vorgesehen ist, die zumindest zwei Aufnahmeelemente der Aufnahmeeinheit definiert relativ zueinander geführt aufzunehmen. Vorzugsweise sind die zumindest zwei Aufnahmeelemente in radialer Richtung des Takttellers relativ zu der Brückeneinheit unbeweglich ausgeführt. Besonders bevorzugt weist die Brückeneinheit zumindest zwei gegenüberliegende Führungen auf, welche jeweils zu einer Führung eines der zumindest zwei Aufnahmeelemente vorgesehen ist. Dadurch kann insbesondere eine vorteilhaft zuverlässige und präzise Aufnahme des zumindest einen Werkstücks erreicht werden. Vorzugsweise kann dadurch insbesondere eine synchrone Bewegung der zumindest zwei Aufnahmeelemente ermöglicht werden.

Des Weiteren wird vorgeschlagen, dass die zumindest eine Bearbeitungseinheit fest mit der zumindest einen Brückeneinheit verbunden ist. Erfindungsgemäß ist die Bearbeitungseinheit an der Brückeneinheit angeordnet. Bevorzugt ist die Bearbeitungseinheit teilweise relativ zu der Brückeneinheit beweglich. Besonders bevorzugt ist arbeitet die Bearbeitungseinheit in einem Koordinatensystem der Brückeneinheit. Die Bearbeitungseinheit arbeitet insbesondere in demselben Koordinatensystem wie die Aufnahmeelemente der Aufnahmeeinheit. Dadurch kann das Werkstück insbesondere besonders präzise mittels der Bearbeitungseinheit angefahren werden. Hierdurch kann insbesondere eine vorteilhaft präzise Bearbeitung ermöglicht werden. Es kann insbesondere eine präzise Bearbeitung ermöglicht werden, bei welcher Ungenauigkeiten durch geometrisch-, thermisch-, oder vibrationsbedingte Fehler zuverlässig vermieden werden können.

Es wird ferner vorgeschlagen, dass die zumindest eine Bearbeitungseinheit zu einer Drehbearbeitung des mittels der Aufnahmeeinheit aufgenommenen Werkstücks vorgesehen ist. Vorzugsweise wird das Werkstück in einem durch die Aufnahmeeinheit aufgenommenen Zustand mittels der Aufnahmeeinheit um eine Mittelachse drehend angetrieben. Bevorzugt werden die zumindest zwei Aufnahmeelemente zu eine Bearbeitung des zumindest einen Werkstücks rotatorisch angetrieben. Besonders bevorzugt ist die Taktzelle von einer Präzisionsdrehzelle gebildet. Dadurch kann insbesondere eine besonders zuverlässige Dreh-Taktzelle bereitgestellt werden. Es kann insbesondere eine besonders präzise Taktzelle bereitgestellt werden, wobei vorzugsweise ein gesamter Umfang des Werkstücks drehbearbeitet werden kann, da das Werkstück aus dem Taktteller entnommen wird.

Es wird weiter vorgeschlagen, dass die zumindest eine Bearbeitungseinheit zumindest zwei Werkzeuge zu einer Bearbeitung des Werkstücks aufweist. Vorzugsweise weist die Bearbeitungseinheit zumindest zwei Drehwerkzeuge, insbesondere Drehmeißel, auf. Bevorzugt sind die Werkzeuge der Bearbeitungseinheit relativ zueinander positionsfest. Besonders bevorzugt sind die zumindest zwei Werkzeuge gemeinsam an einem Werkzeugträger angeordnet, welcher relativ zu der Brückeneinheit beweglich ausgeführt ist. Vorzugsweise können die Werkzeuge wechselweise zur Dreh- oder Fräsbearbeitung eingesetzt werden. Insbesondere kann das gewünschte Werkzeug durch Positionieren einer Achse, insbesondere der Y-Achse, des Werkzeugträgers ausgewählt werden. Dadurch kann insbesondere eine vorteilhaft schnelle und flexible Bearbeitung des Werkstücks erreicht werden. Vorzugsweise kann dadurch insbesondere eine Bearbeitung des Werkstücks in derselben Taktzelle mit verschiedenen Werkzeugen erreicht werden.

Ferner wird vorgeschlagen, dass die zumindest eine Taktzelle zumindest eine Hydraulikeinheit aufweist, welche zu einer Bewegung eines Werkzeugträgers der zumindest einen Bearbeitungseinheit quer zu einer Drehachse des Takttellers vorgesehen ist. Bevorzugt ist der Werkzeugträger dazu vorgesehen, mittels der Hydraulikeinheit relativ zu der Brückeneinheit bewegt zu werden. Vorzugsweise wird der Werkzeugträger mittels der Hydraulikeinheit zu einem Durchführen einer Drehoperation oder einer Fräsoperation, quer zu einer Drehachse des Takttellers, auf das Werkstück zubewegt. Vorzugweise weist die Taktzelle zudem zumindest einen elektrischen Antrieb auf, welcher zu einer Bewegung eines Werkzeugträgers der zumindest einen Bearbeitungseinheit senkrecht zu einer Drehachse des Takttellers vorgesehen ist. Bevorzugt ist der Werkzeugträger dazu vorgesehen, mittels der Hydraulikeinheit und dem elektrischen Antrieb relativ zu der Brückeneinheit bewegt zu werden. Bevorzugt ist der Werkzeugträger mit drei Freiheitsgraden, also insbesondere entlang einer X-Achse, Y-Achse und Z-Achse, ausgestattet. Besonders bevorzugt werden die drei Freiheitsgrade mit der Hydraulikeinheit und/oder dem elektrischen Antrieb gesteuert. Vorzugsweise weist die Hydraulikeinheit zumindest einen hydraulischen Achsantrieb und/oder der zumindest eine elektrische Antrieb zumindest einen elektrischen Achsantrieb an der X- Achse, an der Y-Achse und/oder an der Z-Achse auf. Es sind verschiedene, einem Fachmann als sinnvoll erscheinende Ausführungen des hydraulischen Achsantriebs denkbar, vorzugsweise ist der hydraulische Achsantrieb als Plunger-Zylinder ausgeführt. Unter "Hydraulikeinheit" soll in diesem Zusammenhang insbesondere eine Einheit mit zumindest einer hydraulischen Aktorik, insbesondere mit zumindest einem Hydraulikelement, wie beispielsweise einem Hydraulikzylinder, verstanden werden. Vorzugsweise soll darunter insbesondere eine Antriebseinheit verstanden werden, welche zu einem Bewegen des Werkzeugträgers vorgesehen ist. Dadurch kann insbesondere eine vorteilhaft präzise Bewegung des Werkzeugträgers und damit auch eine vorteilhaft präzise Bearbeitung des Werkstücks ermöglicht werden. Ferner kann durch einen entsprechenden Aufbau eine vorteilhaft kompakte Taktzelle bereitgestellt werden. Vorzugsweise wird die kompakte Bauweise dadurch überhaupt erst möglich.

Des Weiteren wird vorgeschlagen, dass die zumindest eine Brückeneinheit, in einer Ebene senkrecht zu einer Drehachse des Takttellers betrachtet, zumindest teilweise eine Kreissektorform aufweist. Vorzugsweise läuft die Brückeneinheit, in einer Ebene senkrecht zu einer Drehachse des Takttellers betrachtet, zu einer Drehachse des Takttellers hin spitz zu. Bevorzugt ist die Brückeneinheit zumindest teilweise kreiszylindersektorförmig ausgebildet. Darunter, dass "die zumindest eine Brückeneinheit zumindest teilweise eine Kreissektorform aufweist", soll in diesem Zusammenhang insbesondere verstanden werden, dass die Brückeneinheit, in einer Ebene senkrecht zu einer Drehachse des Takttellers betrachtet, zumindest zwei Seitenkanten aufweist, welche spitz aufeinander zulaufen. Vorzugsweise schneiden sich die Seitenkanten zumindest annähernd in einer Haupterstreckungsebene der Brückeneinheit. Bevorzugt bilden die Seitenkanten, in einer Ebene senkrecht zu einer Drehachse des Takttellers betrachtet, jeweils eine Außenkante der Brückeneinheit. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Dadurch kann insbesondere ein vorteilhaft kompakter Aufbau der Taktzelle erreicht werden. Hierdurch kann insbesondere erreicht werden, dass benachbarte Taktzellen nicht durch die Taktzelle beeinträchtigt werden. Vorzugsweise kann dadurch erreicht werden, dass zwei Taktzellen direkt aufeinanderfolgend als aufeinanderfolgende Taktstationen in die Rundtaktmaschine integriert werden können.

Es wird ferner vorgeschlagen, dass die Rundtaktmaschine zumindest eine weitere Taktzelle aufweist, welche zumindest im Wesentlichen identisch zu der zumindest einen Taktzelle ausgebildet ist. Vorzugsweise ist die weitere Taktzelle ebenfalls von einer Präzisionsdrehzelle gebildet. Bevorzugt sind die Taktzelle und die weitere Taktzelle direkt benachbart zueinander angeordnet. Besonders bevorzugt bilden die Taktzellen direkt aufeinanderfolgende Taktstationen. Vorzugsweise ist die weitere Taktzelle vollständig identisch zu der zumindest einen Taktzelle ausgebildet. Dadurch kann insbesondere eine vorteilhafte Rundtaktmaschine bereitgestellt werden.

Zudem wird vorgeschlagen, dass zumindest eine der zumindest zwei Taktzellen zu einer Vorbearbeitung und/oder zu einer Nachbearbeitung des zumindest einen Werkstücks vorgesehen ist. Vorzugsweise ist eine der zumindest zwei Taktzellen zu einer Vorbearbeitung und eine der zumindest zwei Taktzellen zu einer Nachbearbeitung des zumindest einen Werkstücks vorgesehen. Dadurch kann insbesondere eine vorteilhaft genaue Bearbeitung, insbesondere Drehbearbeitung, des Werkstücks erreicht werden. Vorzugsweise können dadurch auch große Materialabträge ermöglicht werden. Ferner können dadurch unterschiedliche Werkzeuge in den zwei Taktzellen verwendet werden.

Ferner wird vorgeschlagen, dass der zumindest eine Taktteller zumindest eine Greifeinheit zu einer Aufnahme des Werkstücks aufweist, welche zumindest zwei Greifflächen mit wesentlich differierenden Radien aufweist. Vorzugsweise weist die Greifeinheit zwei beweglich zueinander angeordnete Greifelemente, welche die zwei Greifflächen ausbilden. Bevorzugt entspricht ein erster Radius der Greiffläche einem Radius des Werkstücks vor Bearbeitung durch die Taktzelle und ein zweiter Radius der Greiffläche einem Radius des Werkstücks nach Bearbeitung durch die Taktzelle. Unter einer "Greifeinheit" soll in diesem Zusammenhang insbesondere eine Einheit verstanden werden, welche zu einer Aufnahme eines Werkstücks vorgesehen ist. Vorzugsweise soll darunter insbesondere eine Einheit verstanden werden, welche dazu vorgesehen ist, das Werkstück greifend, bevorzugt mit zumindest einem Greifelement, aufzunehmen. Bevorzugt ist die Greifeinheit an einem äußeren Radius des Takttellers angeordnet. Besonders bevorzugt weist der Taktteller mehrere Greifeinheiten auf, die jeweils zu einer Aufnahme eines Werkstücks vorgesehen sind. Dadurch können vorteilhaft auch an einer Greiffläche bearbeitete, insbesondere drehbearbeitete, Werkstücke zuverlässig aufgenommen werden. Hierdurch kann insbesondere auch für eine spätere Bearbeitung eine zuverlässige und sichere Aufnahme eines Werkstücks ermöglicht werden.

Vorzugsweise wird vorgeschlagen, dass die zumindest eine Taktzelle relativ zu dem Taktteller verfahrbar ausgebildet ist. Vorzugsweise weist die Taktzelle zumindest einen Antrieb und zumindest eine Führung auf, mittels welcher sich die Taktzelle relativ zu dem Taktteller bewegen kann. Bevorzugt kann die Taktzelle in einer Richtung senkrecht zu einer Drehachse des Takttellers bewegt werden. Die Taktzelle kann daher insbesondere auf den Taktteller zu oder von dem Taktteller weg bewegt werden. Besonders bevorzugt weist die Taktzelle zumindest einen Antrieb und zumindest eine Führung, insbesondere einen Gantry-Antrieb, auf, um das Werkstück aus einer festen Spannposition des Takttellers, insbesondere aus einem ersten Koordinatensystem, abzugreifen und gegebenenfalls wieder zurückzugeben, ohne dass eine weitere Transporteinrichtung notwendig wird. Dadurch kann insbesondere eine vorteilhafte Beweglichkeit erreicht werden, ohne dass Bauteile der Taktzelle relativ zueinander bewegt werden müssen. Hierdurch kann ein vorteilhaft steifes System bereitgestellt werden.

Ferner geht die Erfindung aus von einer Taktzelle der Rundtaktmaschine, mit zumindest einer Aufnahmeeinheit, die zumindest zwei gegenüberliegende Aufnahmeelemente aufweist, welche zu einer gemeinsamen Aufnahme des zumindest einen Werkstücks aus dem Taktteller der Rundtaktmaschine vorgesehen sind, mit zumindest einer Bearbeitungseinheit zu einer Bearbeitung des mittels der Aufnahmeeinheit aufgenommenen Werkstücks und mit zumindest einer, sich in axialer Richtung zumindest teilweise über den Taktteller der Rundtaktmaschine hinweg erstreckenden Brückeneinheit, welche dazu vorgesehen ist, die zumindest zwei Aufnahmeelemente der Aufnahmeeinheit in einem gemeinsamen Koordinatensystem zu führen, wobei die Bearbeitungseinheit an der Brückeneinheit angeordnet ist und wobei die zumindest eine Brückeneinheit dazu vorgesehen ist, die zumindest zwei Aufnahmeelemente der Aufnahmeeinheit definiert relativ zueinander geführt aufzunehmen, wobei die Brückeneinheit zumindest zwei gegenüberliegende Führungen aufweist, welche jeweils zu einer Führung eines der zumindest zwei Aufnahmeelemente vorgesehen sind.

Des Weiteren geht die Erfindung aus von einem Verfahren zu einem Betrieb der Rundtaktmaschine. Es wird vorgeschlagen, dass in einem Entnahmeschritt eine Taktzelle der Rundtaktmaschine in eine Entnahmeposition über einen Taktteller der Rundtaktmaschine gebracht wird und ein Werkstück mittels einer Aufnahmeeinheit der Taktzelle aus dem Taktteller entnommen wird. Vorzugsweise wird in dem Entnahmeschritt das Werkstück aus dem Koordinatensystem des Takttellers, insbesondere mit fest installierten Bearbeitungsstationen, entnommen und in ein neues Koordinatensystem der Taktzelle übergeben. Dadurch kann vorzugsweise eine gesamte Mantelfläche des Werkstücks bearbeitet werden. Ferner kann dadurch insbesondere erreicht werden, dass das Werkstück für eine Bearbeitung unabhängig von dem Taktteller bewegt werden kann. Insbesondere kann das Werkstück rotierend angetrieben werden.

Es wird ferner vorgeschlagen, dass in einem Bearbeitungsschritt die Taktzelle in eine Bearbeitungsposition weg von dem Taktteller gebracht wird und das Werkstück mittels einer Bearbeitungseinheit der Taktzelle bearbeitet wird. Vorzugsweise wird in dem Bearbeitungsschritt die Taktzelle mit dem Werkstück in eine Bearbeitungsposition weg von dem Taktteller gebracht. Dadurch kann insbesondere eine freie Bearbeitung des Werkstücks ermöglicht werden. Es kann insbesondere eine vorteilhafte Zugänglichkeit des Werkstücks durch die Taktzelle ermöglicht werden. Vorzugsweise kann dadurch eine Kollision mit dem Taktteller vermieden werden.

Es wird weiter vorgeschlagen, dass in einem Zuführschritt die Taktzelle in die Entnahmeposition über den Taktteller gebracht wird und das Werkstück mittels der Aufnahmeeinheit der Taktzelle in eine Greifeinheit des Takttellers eingelegt wird. Vorzugsweise wird das Werkstück in dem Zuführschritt mittels der Greifeinheit des Takttellers von der Aufnahmeeinheit der Taktzelle übernommen. Dadurch kann das Werkstück zuverlässig wieder der Taktzelle zugeführt werden.

Ferner wird vorgeschlagen, dass der Entnahmeschritt, der Bearbeitungsschritt und/oder der Zuführschritt während eines Takts der Rundtaktmaschine durchgeführt werden. Vorzugsweise werden der Entnahmeschritt, der Bearbeitungsschritt und der Zuführschritt während eines Takts der Rundtaktmaschine durchgeführt. Dadurch kann insbesondere eine vorteilhaft schnelle Bearbeitung des Werkstücks durch die Rundtaktmaschine bereitgestellt werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Rundtaktmaschine mit einem Taktteller und mit einer Taktzelle in einer schematischen Darstellung,
- Fig. 2: die erfindungsgemäße Rundtaktmaschine mit dem Taktteller und mit der Taktzelle in einer Entnahmeposition in einer schematischen Frontalansicht,
- Fig. 3: die erfindungsgemäße Rundtaktmaschine mit dem Taktteller und mit der Taktzelle in einer Bearbeitungsposition in einer schematischen Frontalansicht,
- Fig. 4: einen Teilausschnitt IV-IV der erfindungsgemäßen Rundtaktmaschine mit dem Taktteller und mit der Taktzelle in der Entnahmeposition in einer schematischen Darstellung,
- Fig. 5: einen Teilausschnitt V-V der erfindungsgemäßen Rundtaktmaschine mit dem Taktteller und mit der Taktzelle in der Bearbeitungsposition in einer schematischen Darstellung,
- Fig. 6: die erfindungsgemäße Rundtaktmaschine mit dem Taktteller, mit der Taktzelle und mit einer weiteren Taktzelle in einer schematischen Schnittdarstellung entlang der Schnittlinie VI-VI,
- Fig. 7: einen Teil der Taktzelle mit einer Brückeneinheit und mit einer Bearbeitungseinheit in einer schematischen Darstellung,
- Fig. 8: einen Teil der Bearbeitungseinheit mit einem Werkzeugträger und mit zwei Werkzeugen in einer schematischen Darstellung,
- Fig. 9: einen Teilausschnitt IX-IX des Takttellers, welcher eine Greifeinheit umfasst, in einer schematischen Darstellung und
- Fig. 10: ein schematisches Ablaufdiagramm eines Verfahrens zu einem Betrieb der Rundtaktmaschine.

### Beschreibung des Ausführungsbeispiels

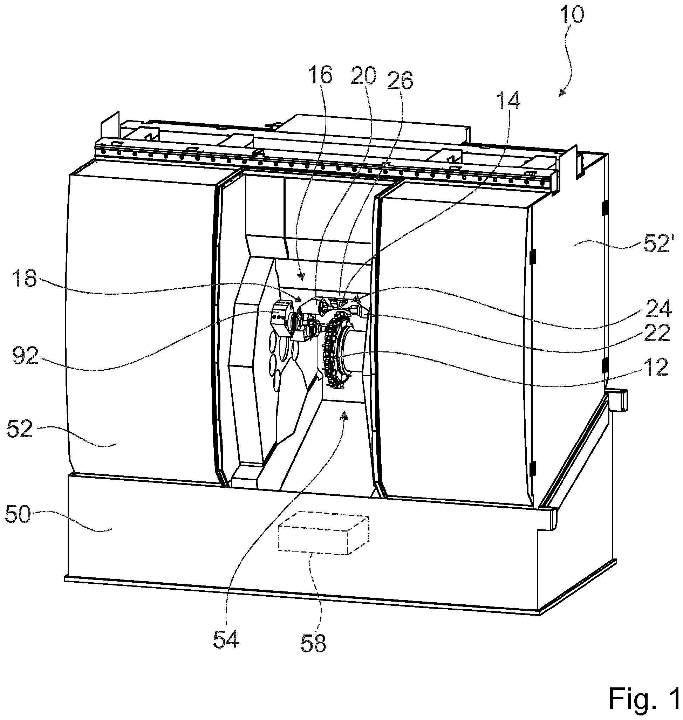

Die Figuren 1, 2 und 3 zeigen eine Rundtaktmaschine 10. Die Rundtaktmaschine 10 ist zu einer getakteten Bearbeitung von Werkstücken 14 vorgesehen. Die Rundtaktmaschine 10 weist ein Gehäuse 50 sowie zwei von dem Gehäuse 50 umschlossene Antriebsbereiche 52, 52' auf. Zwischen den zwei Antriebsbereichen 52, 52' ist ein Bearbeitungsraum 54 angeordnet. Der Bearbeitungsraum 54 kann über eine nicht weiter sichtbare Abdeckung geschlossen werden.

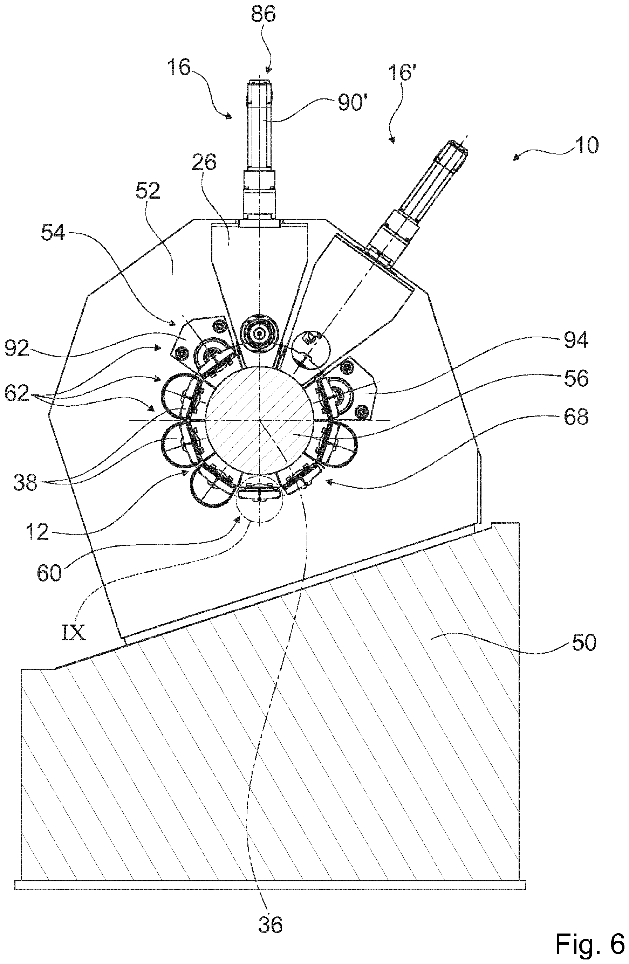

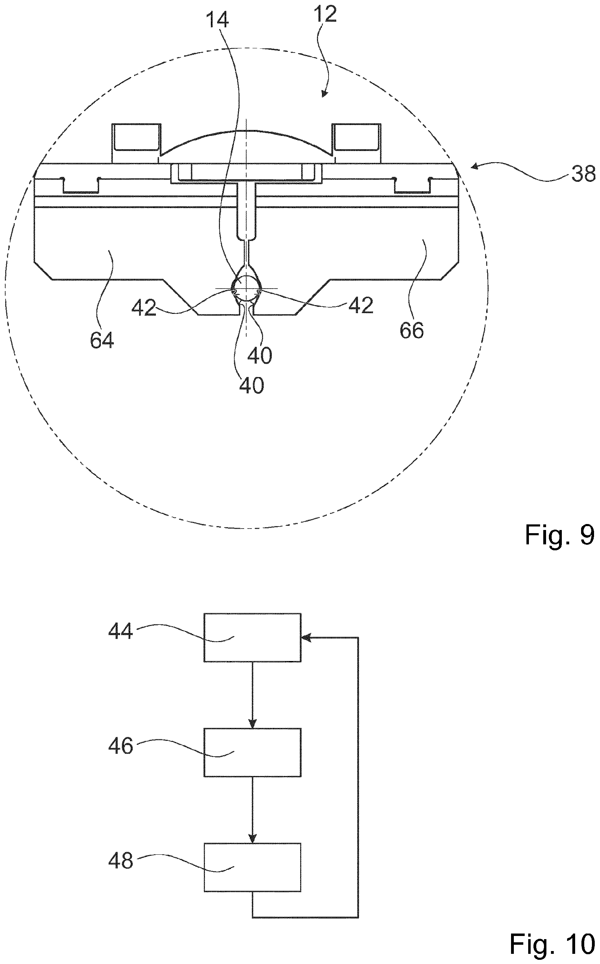

Ferner weist die Rundtaktmaschine 10 einen Taktteller 12 auf. Der Taktteller 12 ist von einem Rundtaktteller gebildet. Der Taktteller 12 ist in dem Bearbeitungsraum 54 angeordnet. Ferner ist der Taktteller 12 um eine Drehachse 36 drehbar ausgebildet. Der Taktteller 12 ist über eine nicht weiter sichtbare Antriebseinheit um die Drehachse 36 rotierend antreibbar. Der Taktteller 12 ist in zumindest einem Betriebszustand zu einer Aufnahme und einem Transport von Werkstücken 14 vorgesehen. Der Taktteller 12 weist einen im Wesentlichen kreisförmigen Grundkörper 56 auf. Ferner weist der Taktteller 12 zumindest eine Greifeinheit 38 zu einer Aufnahme eines Werkstücks 14 auf. Der Taktteller 12 weist mehrere Greifeinheiten 38 auf. Der Taktteller 12 weist beispielhaft zehn Greifeinheiten 38 auf. Die Greifeinheiten 38 bilden jeweils eine Spannstation des Takttellers 12 aus. Die Greifeinheiten 38 sind identisch ausgebildet. Die Greifeinheiten 38 sind an einem Außenumfang des Grundkörpers 56 angeordnet. Die Greifeinheiten 38 sind jeweils zu einer Aufnahme eines Werkstücks 14 vorgesehen. Die Greifeinheiten 38 sind jeweils zu einer festen Einspannung eines Werkstücks 14 vorgesehen. Die Greifeinheiten 38 des Takttellers 12 weisen jeweils zwei Greifflächen 40, 42 mit wesentlich differierenden Radien auf. Die Greifeinheiten 38 weisen jeweils zwei Greifelemente 64, 66 auf, welche relativ zueinander beweglich ausgeführt sind. Die Greifelemente 64, 66 einer Greifeinheit 38 bilden jeweils auf einander zugewandten Seiten die Greifflächen 40, 42 aus. Beide Greifelemente 64, 66 weisen jeweils eine Greiffläche 40 mit einem großen Radius und eine Greiffläche 42 mit einem kleinen Radius auf. Die Greiffläche 42 mit einem kleinen Radius ist jeweils in die Greiffläche 40 mit einem großen Radius integriert. Mittels der Greifeinheiten 38 können jeweils Werkstücke 14 mit dem großen Radius als auch Werkstücke 14 mit dem kleinen Radius sicher gegriffen werden. Der Radius der ersten Greiffläche 40 entspricht dabei einem Radius des Werkstücks 14 vor einer Dreh- oder Fräsbearbeitung, während der Radius der zweiten Greiffläche 42 einem Radius des Werkstücks 14 nach einer Dreh- oder Fräsbearbeitung entspricht. Des Weiteren weisen die Greifeinheiten 38 jeweils eine nicht weiter sichtbare Aktorik auf, über welche die Greifeinheiten 38 geöffnet und geschlossen werden können. Die Aktorik ist zu einer Bewegung der Greifelemente 64, 66 vorgesehen. Die Aktorik der Greifeinheiten 38 ist mit einer Recheneinheit 58 der Rundtaktmaschine 10 verbunden. Die Recheneinheit 58 der Rundtaktmaschine 10 ist zu einer Steuerung und Regelung der Vorgänge der Rundtaktmaschine 10 vorgesehen. Der Taktteller 12 ist während eines Betriebs dazu vorgesehen, die aufgenommenen Werkstücke 14 nach jedem Bearbeitungstakt der Rundtaktmaschine 10 winkelgenau zu verdrehen. Ferner definiert der Taktteller 12 zusammen mit den einander zugewandten Seitenflächen der Antriebsbereiche 52, 52' ein erstes Koordinatensystem, in welchem die Werkstücke 14 aufgenommen sind. An einander zugewandten Seitenflächen der Antriebsbereiche 52, 52' werden alle anderen, zur Bearbeitung der Werkstücke 14 eingesetzten Vorrichtungen direkt oder indirekt befestigt (Figur 6 und 9).

Des Weiteren weist die Rundtaktmaschine 10 mehrere Stationen auf. Die Stationen sind kreisringförmig um den Taktteller 12 angeordnet. Die Rundtaktmaschine 10 weist eine Beladestation 60 auf. An der Beladestation 60 wird der Taktteller 12 mit Werkstücken 14 bestückt. Die Werkstücke 14 sind an der Beladestation 60 von Rohlingen gebildet. Pro Takt wird eine Greifeinheit 38 des Takttellers 12 mit einem Werkstück 14 bestückt. In der Beladestation 60 wird insbesondere ein Endlosrohling zugeführt und nach einer Bestückung der Greifeinheit 38 des Takttellers 12 abgelängt. Ferner weist die Rundtaktmaschine 10 mehrere Bearbeitungsstationen 62 auf. Die Bearbeitungsstationen 62 grenzen in Umfangsrichtung direkt an die Beladestation 60 an. Die Bearbeitungsstationen 62 sind jeweils zu einer Durchführung unterschiedlicher Bearbeitungsschritte vorgesehen. Während eines Betriebs führt der Taktteller 12 die Werkstücke 14 nach den Bearbeitungsstationen 62 pro Takt in Umfangsrichtung jeweils eine Bearbeitungsstation 62 weiter. Der Taktteller 12 führt dazu eine winkelgenaue Drehung durch und bewegt somit das festgespannte Werkstück 14 zu den nächsten Bearbeitungsstationen 62. Nach der Beladestation 60 findet an mindestens einer nachfolgenden Bearbeitungsstation 62 mit mindestens einem Werkzeug mindestens eine beliebige, werkstückabhängige Bearbeitung wie beispielsweise Bohren, Fräsen, Gewindeschneiden, Drehen oder dergleichen statt. Es muss nicht an jeder Bearbeitungsstation 62 eine Operation durchgeführt werden, wenn der Taktteller 12 mehr Stationen hat als Bearbeitungen notwendig sind. In den Figuren sind der Übersichtlichkeit halber lediglich einige der Bearbeitungsstation 62 beispielhaft mit Taktzellen 16, 16', 92, 94 versehen, welche eine Operation durchführen. Die Taktzellen 92, 94 sind beispielhaft von Bohrtaktzellen gebildet. Grundsätzlich wäre jedoch auch denkbar, dass jede Bearbeitungsstation 62 mit einer Taktzellen 16, 16', 92, 94 zur Durchführung einer Operation an dem Werkstück 14 versehen ist. Des Weiteren weist die Rundtaktmaschine 10 eine Entladestation 68 auf, an welcher das Werkstück 14 aus dem Taktteller 12 entfernt wird. Die Entladestation 68 bildet eine letzte Station, bevor eine Greifeinheit 38 des Takttellers 12 wieder an die Beladestation 60 kommt, um nachfolgend an der Beladestation 60 den Taktteller 12 mit einem neuen Werkstück 14 zu bestücken. Der Taktteller 12 hat exakt so viele Greifeinheiten 38 wie die Rundtaktmaschine 10 Stationen hat, sodass bei jedem Takt an der Beladestation 60 ein Werkstück 14 zugeführt wird, an der Entladestation 68 ein fertiges Werkstück 14 entladen wird und an jeder Bearbeitungsstation 62 eine Operation durchgeführt wird (Figur 1 und 6).

Ferner weist die Rundtaktmaschine 10 eine Taktzelle 16 auf. Die Taktzelle 16 bildet eine Bearbeitungsstation 62 der Rundtaktmaschine 10. Die Taktzelle 16 bildet eine Dreh-Bearbeitungsstation der Rundtaktmaschine 10. Die Taktzelle 16 ist zu einer Drehbearbeitung des Werkstücks 14 vorgesehen. Grundsätzlich wäre jedoch auch eine andere, einem Fachmann als sinnvoll erscheinende Ausgestaltung der Taktzelle 16 denkbar. Des Weiteren weist die Rundtaktmaschine 10 eine weitere Taktzelle 16' auf, welche im Wesentlichen identisch zu der Taktzelle 16 ausgebildet ist. Die weitere Taktzelle 16' bildet eine weitere Bearbeitungsstation 62 der Rundtaktmaschine 10. Die weitere Taktzelle 16' ist beispielhaft direkt neben der Taktzelle 16 angeordnet. Die weitere Taktzelle 16' bildet eine Bearbeitungsstation 62 aus, welche auf die Bearbeitungsstation 62 der Taktzelle 16 folgt. Grundsätzlich wäre jedoch auch eine andere, einem Fachmann als sinnvoll erscheinende Ausbildung denkbar. Die zwei Taktzellen 16, 16' sind zu einer Vorbearbeitung und zu einer Nachbearbeitung des Werkstücks 14 vorgesehen. Die Taktzelle 16 ist zu einer Vorbearbeitung des Werkstücks 14 vorgesehen. Bei der Vorbearbeitung wird beispielsweise ein hoher Materialabtrag erzeugt. Ferner ist die weitere Taktzelle 16' zu einer Nachbearbeitung des Werkstücks 14 vorgesehen. Bei der Nachbearbeitung wird lediglich ein geringer Materialabtrag, dafür jedoch eine hohe Oberflächengüte erzeugt. Die Taktzellen 16, 16' sind identisch ausgebildet. Grundsätzlich wäre jedoch denkbar, dass die Taktzellen 16, 16' verschiedene Werkzeuge aufweisen, welche für unterschiedliche Anforderungen vorgesehen sind. Im Folgenden wird insbesondere lediglich die Taktzelle 16 beschrieben, wobei die Beschreibung grundsätzlich auch auf die weitere Taktzelle 16' übertragbar ist (Figur 1 und 6).

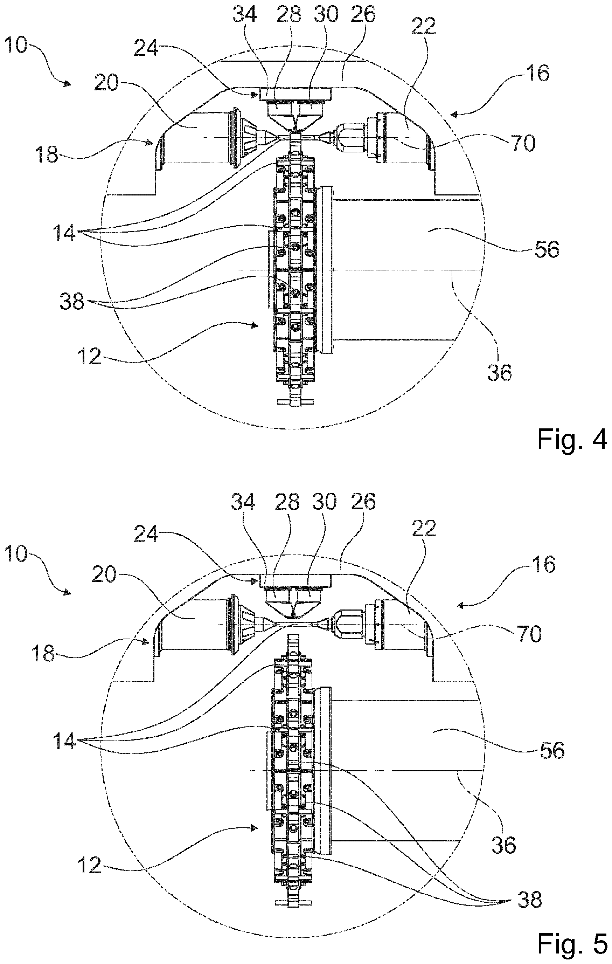

Die Taktzelle 16 weist eine Aufnahmeeinheit 18 auf. Die Aufnahmeeinheit 18 ist zu einer temporären Aufnahme eines Werkstücks 14 vorgesehen. Die Aufnahmeeinheit 18 ist dazu vorgesehen, ein Werkstück 14 während eines Takts kurzzeitig aufzunehmen. Die Aufnahmeeinheit 18 weist zwei gegenüberliegende Aufnahmeelemente 20, 22 auf. Die Aufnahmeelemente 20, 22 sind zu einer gemeinsamen Aufnahme eines Werkstücks 14 aus dem Taktteller 12 vorgesehen. Die Aufnahmeelemente 20, 22 sind dazu vorgesehen, während eines Takts das Werkstück 14, welches in diesem Takt zu einer Bearbeitung durch die Taktzelle 16 vorgesehen ist, aus dem Taktteller 12 gemeinsam aufzunehmen. Die Aufnahmeelemente 20, 22 sind jeweils von einer Drehspindel gebildet. Die Aufnahmeelemente 20, 22 sind drehbar antreibbar ausgebildet. Die Aufnahmeelemente 20, 22 sind für eine Drehbearbeitung des Werkstücks 14 drehbar antreibbar ausgebildet. Die Aufnahmeelemente 20, 22 weisen insbesondere eine nicht weiter sichtbare Antriebseinheit zu einem rotatorischen Antrieb der Aufnahmeelemente 20, 22 auf. Die Aufnahmeelemente 20, 22 sind um eine gemeinsame Drehachse 70 drehbar ausgebildet. Des Weiteren sind die Aufnahmeelemente 20, 22 zu einer Aufnahme eines Werkstücks 14 über einen nicht weiter sichtbaren Antrieb translatorisch zueinander bewegbar. Über den Antrieb können die Aufnahmeelemente 20, 22 aufeinander zu und voneinander weg bewegt werden. Ferner weisen die Aufnahmeelemente 20, 22 jeweils an einem freien Ende ein Zentrierelement auf. Die Zentrierelemente der Aufnahmeelemente 20, 22 sind jeweils von einem Zentrierdorn gebildet. Die Zentrierelemente der Aufnahmeelemente 20, 22 sind jeweils dazu vorgesehen, in eine Zentrierausnehmung des Werkstücks 14 einzugreifen. Die Werkstücke 14 weisen an beiden Enden Zentrierbohrungen auf, in welche die Zentrierelemente der Aufnahmeelemente 20, 22 eingreifen. Durch die Zentrierelemente der Aufnahmeelemente 20, 22 wird ein aufgenommenes Werkstück 14 gegenüber der Aufnahmeeinheit 18 ausgerichtet. Die Zentrierbohrungen in den Werkstücken 14 werden in einer vorhergehenden Bearbeitungsstation 62 eingebracht. Grundsätzlich wäre jedoch auch denkbar, dass die Zentrierbohrungen bereits vor einer Bestückung des Takttellers 12 eingebracht werden. Grundsätzlich wäre jedoch auch denkbar, dass die Aufnahmeelemente 20, 22 an ihren freien Enden einen Zentrierinnenkegel aufweisen, über welchen die Werkstücke 14 positioniert werden (Figur 4 und 5).

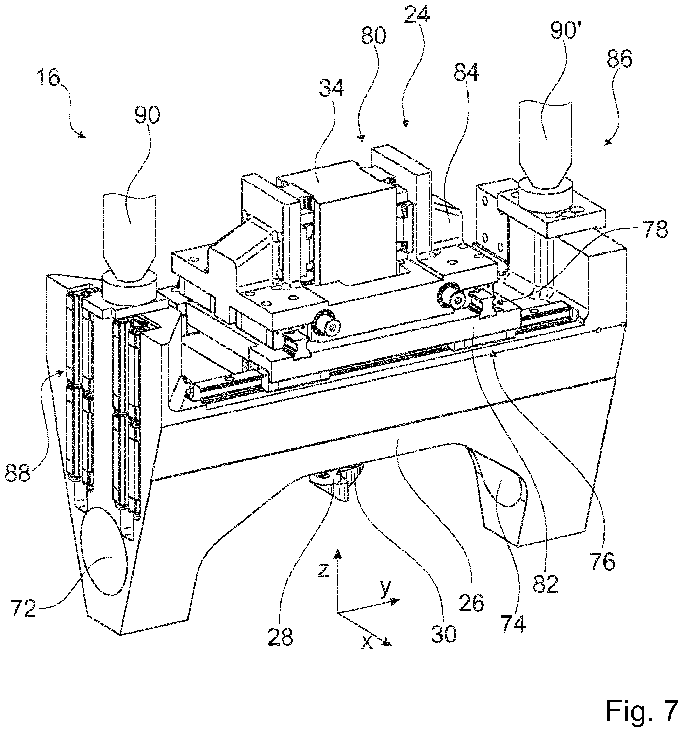

Des Weiteren weist die Taktzelle 16 eine sich in axialer Richtung über den Taktteller 12 hinweg erstreckende Brückeneinheit 26 auf. In einer Richtung entlang der Drehachse 36 des Takttellers 12 betrachtet, erstreckt sich die Brückeneinheit 26 über den Taktteller 12 hinweg. Die Brückeneinheit 26 erstreckt sich parallel zu der Drehachse 36 des Takttellers 12 durch den Bearbeitungsraum 54. Die Brückeneinheit 26 erstreckt sich zwischen den beiden Antriebsbereichen 52, 52' der Rundtaktmaschine 10. Die Brückeneinheit 26 ist von einem eigensteifen, C-förmigen Rahmen gebildet. Die Brückeneinheit 26 weist, in einer Ebene senkrecht zu einer Drehachse 36 des Takttellers 12 betrachtet, teilweise eine Kreissektorform auf. Die Brückeneinheit 26 läuft, in der Ebene senkrecht zu der Drehachse 36 des Takttellers 12 betrachtet, zu der Drehachse 36 des Takttellers 12 hin spitz zu. Die Brückeneinheit 26 ist teilweise kreiszylindersektorförmig ausgebildet. Die Brückeneinheit 26 definiert teilweise eine Außenform der Taktzelle 16. Die Taktzelle 16 weist, in einer Ebene senkrecht zu einer Drehachse 36 des Takttellers 12 betrachtet, teilweise eine Kreissektorform auf. Die Taktzelle 16 ist dabei derart geformt, dass sie in ein für die Bearbeitungsstation 62 definiertes Feld passt, welches sich aus einem Kreissektor mit einem Innenwinkel, welcher sich aus 360° geteilt durch die Anzahl von Stationen der Rundtaktmaschine 10 zusammensetzt. Die Brückeneinheit 26 ist dazu vorgesehen, die zwei Aufnahmeelemente 20, 22 der Aufnahmeeinheit 18 in einem gemeinsamen Koordinatensystem zu führen. Die Brückeneinheit 26 ist dazu vorgesehen, die zwei Aufnahmeelemente 20, 22 der Aufnahmeeinheit 18 in einem Koordinatensystem der Taktzelle 16 zu führen. Die Taktzelle 16 weist ein von einem Koordinatensystem des Takttellers 12 verschiedenes Koordinatensystem auf. Dadurch kann insbesondere erreicht werden, dass das Werkstück 14 aus dem Koordinatensystem des Takttellers 12 mit den fest installierten Bearbeitungsstationen 62 entnommen werden und in ein neues Koordinatensystem der Taktzelle 16 übergeben werden kann. Ferner ist die Brückeneinheit 26 dazu vorgesehen, die Aufnahmeelemente 20, 22 der Aufnahmeeinheit 18 definiert relativ zueinander geführt aufzunehmen. Die Brückeneinheit 26 weist zwei gegenüberliegende Führungsausnehmungen 72, 74 auf. Die Führungsausnehmungen 72, 74 sind koaxial zueinander angeordnet. Die Führungsausnehmungen 72, 74 sind jeweils von zylindrischen Ausnehmungen gebildet. Die Führungsausnehmungen 72, 74 sind jeweils in Richtung der Drehachse 36 des Takttellers 12 auskragenden Fortsätzen der Brückeneinheit 26 eingebracht. Die Aufnahmeelemente 20, 22 sind in den Führungsausnehmungen 72, 74 der Brückeneinheit 26 geführt. Die Aufnahmeelemente 20, 22 sind über die Führungsausnehmungen 72, 74 der Brückeneinheit 26 definiert relativ zueinander ausgerichtet (Figur 7).

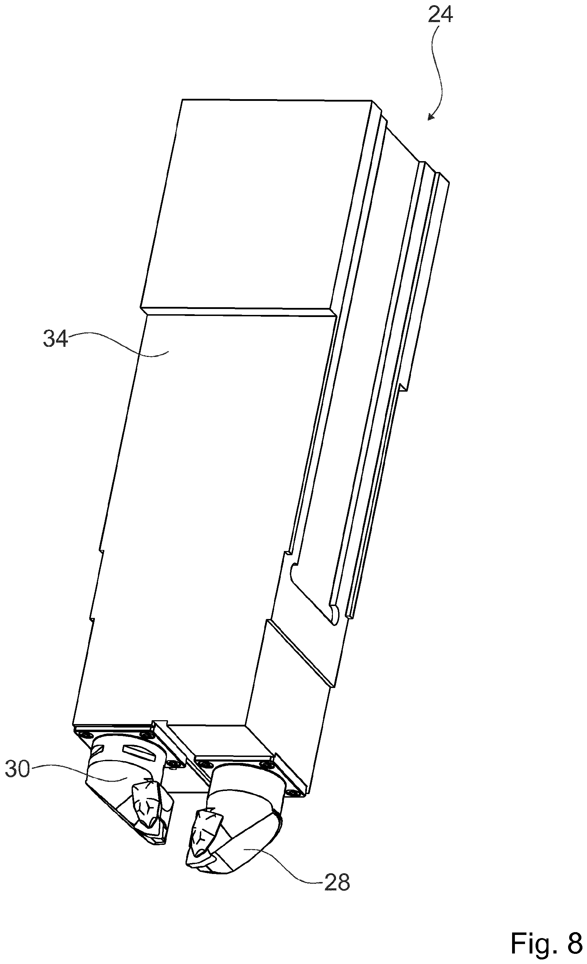

Ferner weist die Taktzelle 16 eine Bearbeitungseinheit 24 auf. Die Bearbeitungseinheit 24 ist zu einer Bearbeitung des mittels der Aufnahmeeinheit 18 aufgenommenen Werkstücks 14 vorgesehen. Die Bearbeitungseinheit 24 ist zu einer Drehbearbeitung des mittels der Aufnahmeeinheit 18 aufgenommenen Werkstücks 14 vorgesehen. Das Werkstück 14 wird während einer Bearbeitung mittels der Aufnahmeeinheit 18 rotierend angetrieben und mittels der Bearbeitungseinheit 24 bearbeitet. Die Bearbeitungseinheit 24 arbeitet in dem Koordinatensystem der Taktzelle 16. Die Bearbeitungseinheit 24 arbeitet daher in demselben Koordinatensystem wie die Aufnahmeeinheit 18. Die Bearbeitungseinheit 24 ist fest mit der Brückeneinheit 26 verbunden. Die Bearbeitungseinheit 24 ist an der Brückeneinheit 26 angeordnet. Die Bearbeitungseinheit 24 ist über die Brückeneinheit 26 relativ zu der Aufnahmeeinheit 18 definiert ausgerichtet. Ferner ist die Bearbeitungseinheit 24 teilweise relativ zu der Brückeneinheit 26 beweglich. Die Bearbeitungseinheit 24 weist einen Werkzeugträger 34 auf. Der Werkzeugträger 34 ist relativ zu der Brückeneinheit 26 beweglich ausgeführt. Die Taktzelle 16 weist eine nicht weiter sichtbare Hydraulikeinheit auf. Die Hydraulikeinheit bildet einen Teil der Bearbeitungseinheit 24. Die Hydraulikeinheit ist zu einer Bewegung eines Werkzeugträgers 34 der Bearbeitungseinheit 24 relativ zu der Brückeneinheit 26 vorgesehen. Ferner weist die Taktzelle 16 einen nicht weiter sichtbaren elektrischen Antrieb auf. Der elektrische Antrieb bildet einen Teil der Bearbeitungseinheit 24. Der elektrische Antrieb ist zu einer Bewegung eines Werkzeugträgers 34 der Bearbeitungseinheit 24 relativ zu der Brückeneinheit 26 vorgesehen. Der elektrische Antrieb ist zu einer Bewegung eines Werkzeugträgers 34 der Bearbeitungseinheit 24 senkrecht zu einer Drehachse 36 des Takttellers 12 vorgesehen. Der Werkzeugträger 34 wird mittels des elektrischen Antriebs zu einem Durchführen einer Drehoperation senkrecht zu der Drehachse 36 des Takttellers 12 auf das Werkstück 14 zubewegt. Ferner wird der Werkzeugträger 34 abhängig von einer Bearbeitungsaufgabe relativ zu dem Werkstück 14 verfahren. Der Werkzeugträger 34 weist gegenüber der Brückeneinheit 26 drei Freiheitsgrade auf. Der Werkzeugträger 34 weist gegenüber der Brückeneinheit 26 einen Freiheitsgrad entlang einer X-Achse, entlang einer Y-Achse und entlang einer Z-Achse auf. Die Bearbeitungseinheit 24 weist Führungseinheiten 76, 78, 80 auf. Eine erste Führungseinheit 76 führt den Werkzeugträger 34 entlang einer Y-Achse. Die erste Führungseinheit 76 umfasst fest mit der Brückeneinheit 26 verbundene Führungsschienen. Ferner umfasst die erste Führungseinheit 76 an einem ersten Zwischenrahmen 82 der Bearbeitungseinheit 24 angeordnete Führungsschlitten, welche auf den Führungsschienen der ersten Führungseinheit 76 geführt sind. Eine zweite Führungseinheit 78 führt den Werkzeugträger 34 entlang einer X-Achse. Die zweite Führungseinheit 78 umfasst fest mit dem ersten Zwischenrahmen 82 verbundene Führungsschienen sowie an einem zweiten Zwischenrahmen 84 der Bearbeitungseinheit 24 angeordnete Führungsschlitten, welche auf den Führungsschienen der zweiten Führungseinheit 78 geführt sind. Eine dritte Führungseinheit 80 führt den Werkzeugträger 34 entlang einer Z-Achse. Die dritte Führungseinheit 80 umfasst fest mit dem zweiten Zwischenrahmen 84 verbundene Führungsschienen sowie an dem Werkzeugträger 34 der Bearbeitungseinheit 24 angeordnete Führungsschlitten, welche auf den Führungsschienen der dritten Führungseinheit 80 geführt sind. Eine Bewegung des Werkzeugträgers 34 relativ zu der Brückeneinheit 26 wird teilweise mittels eines nicht weiter sichtbaren elektrischen Antriebs gesteuert. Die Führungseinheit 78 wird mittels eines nicht weiter sichtbaren elektrischen Antriebs gesteuert. Der elektrische Antrieb weist beispielhaft zwei nicht weiter sichtbare elektrische Achsantriebe auf. Die elektrischen Achsantriebe dienen dabei jeweils zu einer separaten Ansteuerung der Y- Achse und der Z-Achse. Die elektrischen Achsantriebe sind an der ersten und dritten Führungseinheit 76, 80 angeordnet. Die Hydraulikeinheit weist beispielhaft einen nicht weiter sichtbaren hydraulischen Achsantrieb auf. Der hydraulische Achsantrieb ist an der zweiten Führungseinheit 78 angeordnet. Der Zwischenrahmen 84 wird mittels des hydraulischen Achsantrieb gesteuert. Der hydraulische Achsantrieb dient zu einer separaten Ansteuerung der X- Achse. Der hydraulische Achsantrieb ist von Plunger-Zylindern gebildet. Grundsätzlich wäre jedoch auch eine andere, einem Fachmann als sinnvoll erscheinende Ausgestaltung denkbar (Figur 7 und 8).

Die Bearbeitungseinheit 24 weist zwei Werkzeuge 28, 30 zu einer Bearbeitung des Werkstücks 14 auf. Die Werkzeuge 28, 30 sind jeweils von einem Drehwerkzeug gebildet. Die Werkzeuge 28, 30 sind jeweils von einem Drehmeißel gebildet. Die Werkzeuge 28, 30 sind an einem freien Ende des Werkzeugträgers 34 angeordnet. Die Werkzeuge 28, 30 sind relativ zueinander positionsfest. Die Werkzeuge 28, 30 sind positionsfest an dem Werkzeugträger 34 angeordnet. Die Werkzeuge 28, 30 sind wechselbar ausgeführt. Die Werkzeuge 28, 30 können wechselweise zur Drehbearbeitung eingesetzt werden. Die Werkzeuge 28, 30 werden getrennt voneinander verwendet. Ein verwendetes Werkzeug 28, 30 wird abhängig von einer Art des Werkzeugs und/oder abhängig von einer Ausrichtung des Werkzeugs 28, 30 relativ zu dem Werkstück 14 ausgewählt. Das aktuell gewünschte Werkzeug 28, 30 wird durch Positionieren des Werkzeugträgers 34 entlang der X-Achse ausgewählt (Figur 7 und 8).

Ferner ist die Taktzelle 16 relativ zu dem Taktteller 12 verfahrbar ausgebildet. Die Taktzelle 16 weist eine Antriebseinheit 86 auf, mittels welcher die Taktzelle 16 relativ zu dem Taktteller 12 bewegt werden kann. Die Taktzelle 16 kann mittels der Antriebseinheit 86 translatorisch verfahren werden. Die Taktzelle 16 kann mittels der Antriebseinheit 86 in einer Richtung senkrecht zu der Drehachse 36 des Takttellers 12 verfahren werden. Die Taktzelle 16 kann daher auf den Taktteller 12 zu oder von dem Taktteller 12 weg bewegt werden. Die Antriebseinheit 86 ist von einem Gantry-Antrieb gebildet. Die Antriebseinheit 86 weist zwei Führungssysteme 88 auf, welche jeweils an den Seiten der Brückeneinheit 26 angeordnet sind. Die Führungssysteme 88 sind jeweils an den den Antriebsbereichen 52, 52' zugewandten Seiten der Brückeneinheit 26 angeordnet. Die Antriebseinheit 86 weist jeweils ein Führungssystem 88 pro Seite der Brückeneinheit 26 auf. Die Führungssysteme 88 sind jeweils von Führungsschienen gebildet. Ferner weist die Antriebseinheit 86 zwei Antriebsmotoren 90, 90' auf. Die Antriebsmotoren 90, 90' sind an der Brückeneinheit 26 angeordnet. Die Antriebsmotoren 90, 90' werden synchron betrieben. Mittels der Antriebsmotoren 90, 90' kann die Taktzelle 16 relativ zu dem Gehäuse 50 der Rundtaktmaschine 10 bewegt werden (Figur 7).

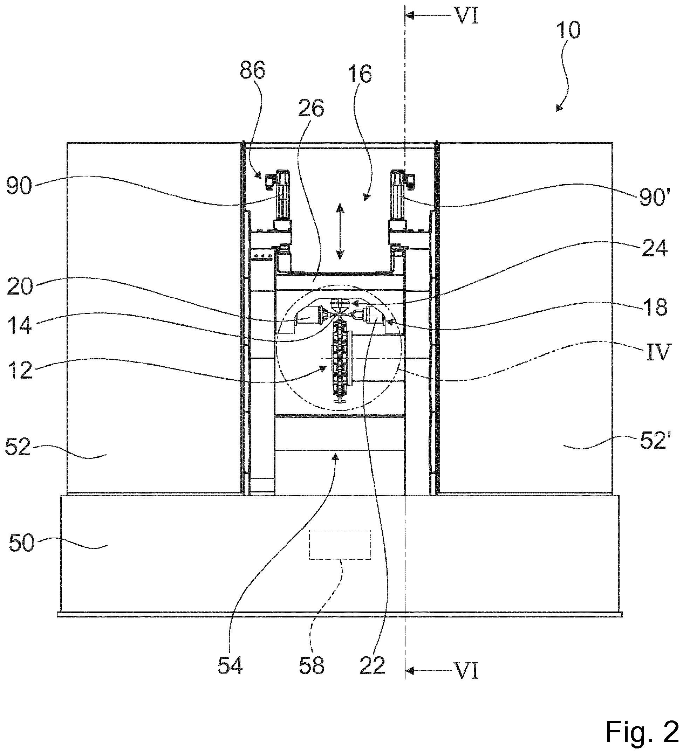

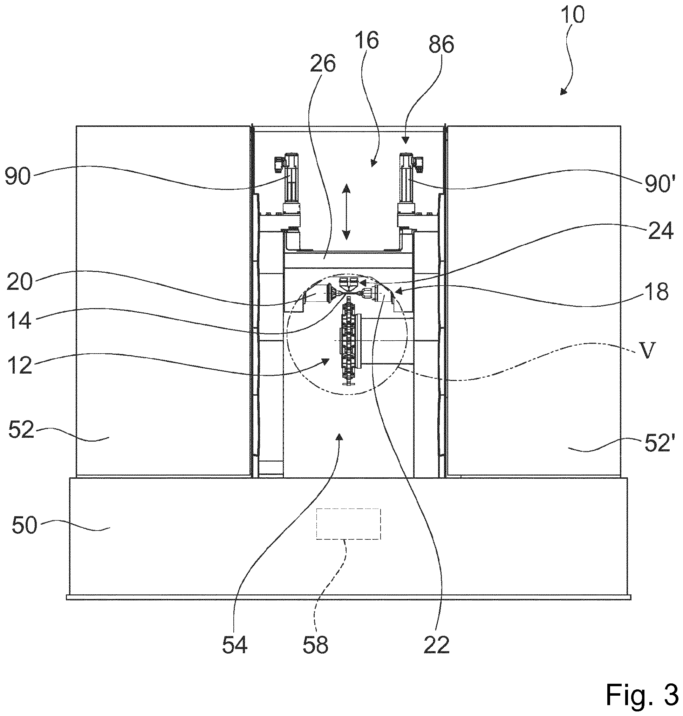

Durch Verfahren der Taktzelle 16 relativ zu dem Taktteller 12 kann ein Werkstück 14 mittels der Aufnahmeeinheit 18 aus einer festen Spannposition des Takttellers 12 entnommen und zu einer Bearbeitung von dem Taktteller 12 wegbewegt werden. Durch die Bewegung der gesamten Taktzelle 16 bleibt das Koordinatensystem der Taktzelle 16 in sich steif. Durch Verfahren der Taktzelle 16 relativ zu dem Taktteller 12 kann ein Werkstück 14 mittels der Aufnahmeeinheit 18 daher aus einer festen Spannposition des Takttellers 12 und aus einem ersten Koordinatensystem des Takttellers 12 entnommen und gegebenenfalls wieder zurückgegeben werden, ohne dass eine weitere Transporteinrichtung notwendig wird. Die Figuren 2 und 4 zeigen die Taktzelle 16 dabei jeweils in einer Entnahmeposition. In der Entnahmeposition weist die Taktzelle 16 einen minimal möglichen Abstand zu dem Taktteller 12 auf, um ein Werkstück 14 des Takttellers 12 zu greifen oder das Werkstück 14 in den Taktteller 12 zu legen. Die Figuren 3 und 5 zeigen die Taktzelle 16 jeweils in einer Bearbeitungsposition. In der Bearbeitungsposition weist die Taktzelle 16 einen maximalen möglichen Abstand zu dem Taktteller 12 auf, um das Werkstück 14 frei bearbeiten zu können (Figur 4 und 5).

Die Taktzelle 16 bildet ein geschlossenes System, welches in eine bestehende Rundtaktmaschine 10 nachgerüstet werden kann.

Figur 10 zeigt ein schematisches Ablaufdiagramm eines Verfahrens zu einem Betrieb der Rundtaktmaschine 10. Das Verfahren beschreibt ein Betrieb der Taktzelle 16. Das Verfahren beschreibt einen Takt der Taktzelle 16. Ein Takt wird mit einem Entnahmeschritt 44 begonnen. Bei dem Verfahren wird in dem Entnahmeschritt 44 die Taktzelle 16 der Rundtaktmaschine 10 in eine Entnahmeposition über den Taktteller 12 der Rundtaktmaschine 10 gebracht und ein Werkstück 14 mittels einer Aufnahmeeinheit 18 der Taktzelle 16 aus dem Taktteller 12 entnommen. In dem Entnahmeschritt 44 wird die Aufnahmeeinheit 18 zu einer Aufnahme des Werkstücks 14 geschlossen. Es wird dabei das in diesem Takt der Taktzelle 16 zugeordnete Werkstück 14 aufgenommen. Hierzu werden die Aufnahmeelemente 20, 22 mittels dem nicht weiter sichtbaren Antrieb translatorisch aufeinander zubewegbar. Durch die Zentrierelemente der Aufnahmeelemente 20, 22 wird das Werkstück 14 bei einer Aufnahme relativ zu der Taktzelle 16 ausgerichtet. Durch die Zentrierelemente der Aufnahmeelemente 20, 22 wird das Werkstück 14 bei einer Aufnahme relativ zu dem Koordinatensystem der Taktzelle 16 ausgerichtet. Darauffolgend wird die entsprechende Greifeinheit 38 des Takttellers 12, welche das entsprechende Werkstück 14 greift, geöffnet. Dabei wird das Werkstück 14 aus dem Koordinatensystem des Takttellers 12 entnommen und in das Koordinatensystem der Taktzelle 16 übergeben. Anschließend folgt ein Bearbeitungsschritt 46. In dem Bearbeitungsschritt 46 wird die Taktzelle 16 in eine Bearbeitungsposition weg von dem Taktteller 12 gebracht und das Werkstück 14 mittels einer Bearbeitungseinheit 24 der Taktzelle 16 bearbeitet. In dem Bearbeitungsschritt 46 wird die Taktzelle 16 mittels der Antriebseinheit 86 aus der Entnahmeposition von dem Taktteller 12 in eine Bearbeitungsposition weggefahren. Anschließend werden die Aufnahmeelemente 20, 22 der Aufnahmeeinheit 18 mittels der nicht weiter sichtbaren Antriebseinheit um die Drehachse 70 rotierend angetrieben. Durch die Drehung der Aufnahmeelemente 20, 22 wird das Werkstück 14 um die Drehachse 70 rotiert. Die Drehachse 70 entspricht insbesondere einer Symmetrieachse des Werkstücks 14. Darauffolgend wird eines der Werkzeuge 28, 30 durch eine Bewegung des Werkzeugträgers 34 an das Werkstück 14 herangefahren. Eine Position des Werkzeugträgers 34 wird über den nicht weiter sichtbaren elektrischen Antrieb gesteuert. Durch ein Heranfahren einer der Werkzeuge 28, 30 an das sich drehende Werkstück 14 erfolgt eine Drehbearbeitung des Werkstücks 14. Nach der Drehbearbeitung wird eine Drehung der Aufnahmeelemente 20, 22 und damit eine Drehung des Werkstücks 14 gestoppt. Anschließend folgt ein Zuführschritt 48. In dem Zuführschritt 48 wird die Taktzelle 16 in die Entnahmeposition über den Taktteller 12 gebracht und das Werkstück 14 mittels der Aufnahmeeinheit 18 der Taktzelle 16 in eine Greifeinheit 38 des Takttellers 12 eingelegt. In dem Zuführschritt 48 wird die Taktzelle 16 mittels der Antriebseinheit 86 aus der Bearbeitungsposition an den Taktteller 12 herangefahren. Dadurch wird das Werkstück 14 zwischen der geöffneten Greifeinheit 38 angeordnet. Darauffolgend wird die entsprechende Greifeinheit 38 des Takttellers 12, welche zu einer Aufnahme des entsprechenden Werkstücks 14 vorgesehen ist, geschlossen. Dabei wird das Werkstück 14 aus dem Koordinatensystem der Taktzelle 16 entnommen und in das Koordinatensystem des Takttellers 12 zurückgegeben. Grundsätzlich wäre jedoch auch denkbar dass, insbesondere abhängig von einer Position der Taktzelle 16 in der Rundtaktmaschine 10, das Werkstück 14 direkt aus der Rundtaktmaschine 10 abgeführt wird oder auf anderem Wege in das ersten oder in ein weiteres Koordinatensystem zur Bearbeitung übergeben wird. Anschließend wird die Aufnahmeeinheit 18 der Taktzelle 16 geöffnet. Hierzu werden die Aufnahmeelemente 20, 22 mittels dem nicht weiter sichtbaren Antrieb translatorisch voneinander wegbewegbar. Anschließend ist der Takt beendet und der Taktteller 12 wird eine Station der Rundtaktmaschine 10 weitergedreht. Auf den Takt der Taktzelle 16 folgt ein weiterer Takt der Taktzelle 16 und das Verfahren wird bei dem Entnahmeschritt 44 wieder von Neuem begonnen. Der Entnahmeschritt 44, der Bearbeitungsschritt 46 und der Zuführschritt 48 werden während eines Takts der Rundtaktmaschine 10 durchgeführt.

## Patentansprüche

1. Rundtaktmaschine mit zumindest einem Taktteller (12), welcher in zumindest einem Betriebszustand zu einer Aufnahme und einem Transport zumindest eines Werkstücks (14) vorgesehen ist, und mit zumindest einer Taktzelle (16, 16'), welche zumindest eine Aufnahmeeinheit (18) mit zumindest zwei gegenüberliegenden Aufnahmeelementen (20, 22), welche zu einer gemeinsamen Aufnahme des zumindest einen Werkstücks (14) aus dem Taktteller (12) vorgesehen sind, und zumindest eine Bearbeitungseinheit (24) zu einer Bearbeitung des mittels der Aufnahmeeinheit (18) aufgenommenen Werkstücks (14) aufweist,
**dadurch gekennzeichnet, dass**
die zumindest eine Taktzelle (16, 16') zumindest eine, sich in axialer Richtung zumindest teilweise über den Taktteller (12) hinweg erstreckende Brückeneinheit (26) aufweist, welche dazu vorgesehen ist, die zumindest zwei Aufnahmeelemente (20, 22) der Aufnahmeeinheit (18) in einem gemeinsamen Koordinatensystem zu führen, wobei die Bearbeitungseinheit (24) an der Brückeneinheit (26) angeordnet ist.

2. Rundtaktmaschine nach Anspruch 1,
**dadurch gekennzeichnet, dass**
die zumindest eine Brückeneinheit (26) dazu vorgesehen ist, die zumindest zwei Aufnahmeelemente (20, 22) der Aufnahmeeinheit (18) definiert relativ zueinander geführt aufzunehmen.

3. Rundtaktmaschine nach Anspruch 1 oder 2,
**dadurch gekennzeichnet, dass**
die zumindest eine Bearbeitungseinheit (24) fest mit der zumindest einen Brückeneinheit (26) verbunden ist.

4. Rundtaktmaschine nach einem der vorhergehenden Ansprüche,
**dadurch gekennzeichnet, dass**
die zumindest eine Bearbeitungseinheit (24) zu einer Drehbearbeitung des mittels der Aufnahmeeinheit (18) aufgenommenen Werkstücks (14) vorgesehen ist.

5. Rundtaktmaschine nach einem der vorhergehenden Ansprüche,
**dadurch gekennzeichnet, dass**
die zumindest eine Bearbeitungseinheit (24) zumindest zwei Werkzeuge (28, 30) zu einer Bearbeitung des Werkstücks (14) aufweist.

6. Rundtaktmaschine nach einem der vorhergehenden Ansprüche,
**dadurch gekennzeichnet, dass**
die zumindest eine Taktzelle (16, 16') zumindest eine Hydraulikeinheit aufweist, welche zu einer Bewegung eines Werkzeugträgers (34) der zumindest einen Bearbeitungseinheit (24) quer zu einer Drehachse (36) des Takttellers (12) vorgesehen ist.

7. Rundtaktmaschine nach einem der vorhergehenden Ansprüche,
**dadurch gekennzeichnet, dass**
die zumindest eine Brückeneinheit (26), in einer Ebene senkrecht zu einer Drehachse (36) des Takttellers (12) betrachtet, zumindest teilweise eine Kreissektorform aufweist.

8. Rundtaktmaschine nach einem der vorhergehenden Ansprüche,
**gekennzeichnet durch**
zumindest eine weitere Taktzelle (16'), welche zumindest im Wesentlichen identisch zu der zumindest einen Taktzelle (16) ausgebildet ist.

9. Rundtaktmaschine nach Anspruch 8,
**dadurch gekennzeichnet, dass**
zumindest eine der zumindest zwei Taktzellen (16, 16') zu einer Vorbearbeitung und/oder zu einer Nachbearbeitung des zumindest einen Werkstücks (14) vorgesehen ist.

10. Rundtaktmaschine nach einem der vorhergehenden Ansprüche,
**dadurch gekennzeichnet, dass**
der zumindest eine Taktteller (12) zumindest eine Greifeinheit (38) zu einer Aufnahme des Werkstücks (14) aufweist, welche zumindest zwei Greifflächen (40, 42) mit wesentlich differierenden Radien aufweist.

11. Rundtaktmaschine nach einem der vorhergehenden Ansprüche,
**dadurch gekennzeichnet, dass**
die zumindest eine Taktzelle (16, 16') relativ zu dem Taktteller (12) verfahrbar ausgebildet ist.

12. Taktzelle für eine Rundtaktmaschine (10) nach einem der vorhergehenden Ansprüche, mit zumindest einer Aufnahmeeinheit (18), die zumindest zwei gegenüberliegende Aufnahmeelemente (20, 22) aufweist, welche zu einer gemeinsamen Aufnahme des zumindest einen Werkstücks (14) aus dem Taktteller (12) der Rundtaktmaschine (10) vorgesehen sind, mit zumindest einer Bearbeitungseinheit (24) zu einer Bearbeitung des mittels der Aufnahmeeinheit (18) aufgenommenen Werkstücks (14) und mit zumindest einer Brückeneinheit (26), die sich in axialer Richtung zumindest teilweise über einen Taktteller (12) einer Rundtaktmaschine (10) hinweg erstrecken kann, wobei die Brückeneinheit (26) dazu vorgesehen ist, die zumindest zwei Aufnahmeelemente (20, 22) der Aufnahmeeinheit (18) in einem gemeinsamen Koordinatensystem zu führen, wobei die Bearbeitungseinheit (24) an der Brückeneinheit (26) angeordnet ist und wobei die zumindest eine Brückeneinheit (26) dazu vorgesehen ist, die zumindest zwei Aufnahmeelemente (20, 22) der Aufnahmeeinheit (18) definiert relativ zueinander geführt aufzunehmen, wobei die Brückeneinheit (26) zumindest zwei gegenüberliegende Führungen aufweist, welche jeweils zu einer Führung eines der zumindest zwei Aufnahmeelemente (20, 22) vorgesehen sind.

13. Verfahren zu einem Betrieb einer Rundtaktmaschine (10) nach einem der Ansprüche 1 bis 11,
**dadurch gekennzeichnet, dass**
in einem Entnahmeschritt (44) eine Taktzelle (16, 16') der Rundtaktmaschine (10) in eine Entnahmeposition über einen Taktteller (12) der Rundtaktmaschine (10) gebracht wird und ein Werkstück (14) mittels einer Aufnahmeeinheit (18) der Taktzelle (16) aus dem Taktteller (12) entnommen wird.

14. Verfahren nach Anspruch 13,
**dadurch gekennzeichnet, dass**
in einem Bearbeitungsschritt (46) die Taktzelle (16, 16') in eine Bearbeitungsposition, weg von dem Taktteller (12) gebracht wird und das Werkstück (14) mittels einer Bearbeitungseinheit (24) der Taktzelle (16) bearbeitet wird.

15. Verfahren nach Anspruch 13 oder 14,
**dadurch gekennzeichnet, dass**
in einem Zuführschritt (48) die Taktzelle (16, 16') in die Entnahmeposition über den Taktteller (12) gebracht wird und das Werkstück (14) mittels der Aufnahmeeinheit (18) der Taktzelle (16, 16') in eine Greifeinheit (38) des Takttellers (12) eingelegt wird.

16. Verfahren nach einem der Ansprüche 13 bis 15,
**dadurch gekennzeichnet, dass**
der Entnahmeschritt (44), der Bearbeitungsschritt (46) und/oder der Zuführschritt (48) während eines Takts der Rundtaktmaschine (10) durchgeführt werden.

## Claims

1. Rotary indexing machine with at least one indexing plate (12) which is in at least one operating state configured to receive and transport at least one workpiece (14), and with at least one clocking cell (16, 16') comprising at least one receiving unit (18) with at least two opposite-situated receiving elements (20, 22) which are configured for together receiving the at least one workpiece (14) from the indexing plate (12) and comprising at least one machining unit (24) for machining the workpiece (14) received by the receiving unit (18),
**characterised in that**
the at least one clocking cell (16, 16') comprises at least one bridge unit (26), which extends at least partly over the indexing plate (12) in an axial direction and is configured to guide the at least two receiving elements (20, 22) of the receiving unit (18) in a common coordinate system,
the machining unit (24) being arranged on the bridge unit (26).

2. Rotary indexing machine according to claim 1,
**characterised in that**
the at least one bridge unit (26) is configured to accommodate the at least two receiving elements (20, 22) of the receiving unit (18) such that they are guided relative to each other in a defined manner.

3. Rotary indexing machine according to claim 1 or 2,
**characterised in that**
the at least one machining unit (24) is fixedly connected to the at least one bridge unit (26).

4. Rotary indexing machine according to one of the preceding claims, **characterised in that**
the at least one machining unit (24) is configured for a rotary machining of the workpiece (14) received by the receiving unit (18).

5. Rotary indexing machine according to one of the preceding claims, **characterised in that**
the at least one machining unit (24) comprises at least two tools (28, 30) for a machining of the workpiece (14).

6. Rotary indexing machine according to one of the preceding claims, **characterised in that**
the at least one clocking cell (16, 16') comprises at least one hydraulic unit, which is configured for moving a tool carrier (34) of the at least one machining unit (24) transversely to a rotation axis (36) of the indexing plate (12).

7. Rotary indexing machine according to one of the preceding claims, **characterised in that**
viewed in a plane that is perpendicular to a rotation axis (36) of the indexing plate (12), the at least one bridge unit (26) has at least partly a circular-sector shape.

8. Rotary indexing machine according to one of the preceding claims, **characterised by**
at least one further clocking cell (16'), which is embodied at least substantially identically to the at least one clocking cell (16).

9. Rotary indexing machine according to claim 8,
**characterised in that**
at least one of the at least two clocking cells (16, 16') is configured for a pre-machining and/or for a subsequent machining of the at least one workpiece (14).

10. Rotary indexing machine according to one of the preceding claims, **characterised in that**
the at least one indexing plate (12) comprises at least one gripping unit (38) for receiving the workpiece (14), the gripping unit (38) having at least two gripping surfaces (40, 42) with substantially differing radii.

11. Rotary indexing machine according to one of the preceding claims, **characterised in that**
the at least one clocking cell (16, 16') is realized so as to be traversable with respect to the indexing plate (12).

12. Clocking cell for a rotary indexing machine (10) according to one of the preceding claims,
with at least one receiving unit (18) comprising at least two receiving elements (20, 22) for together receiving the at least one workpiece (14) from the indexing plate (12) of the rotary indexing machine (10), with at least one machining unit (24) for a machining of the workpiece (14) received by the receiving unit (18) and with at least one bridge unit (26), which may extend at least partly over an indexing plate (12) of a rotary indexing machine (10) in an axial direction,
the bridge unit (26) being configured to guide the at least two receiving elements (20, 22) of the receiving unit (18) in a common coordinate system,
the machining unit (24) being arranged on the bridge unit (26) and
the at least one bridge unit (26) being configured to accommodate the at least two receiving elements (20, 22) of the receiving unit (18) such that they are guided relative to each other in a defined manner,
the bridge unit (26) comprising at least two opposite-situated guidings, which are respectively configured to guide one of the at least two receiving elements (20, 22).

13. Method for operating a rotary indexing machine (10) according to one of claims 1 to 11,
**characterised in that**
in a removal step (44) a clocking cell (16, 16') of the rotary indexing machine (10) is brought into a removal position above an indexing plate (12) of the rotary indexing machine (10) and a workpiece (14) is removed from the indexing plate (12) by means of a receiving unit (18) of the clocking cell (16).

14. Method according to claim 13,
**characterised in that**
in a machining step (46) the clocking cell (16, 16') is brought into a machining position, away from the indexing plate (12), and the workpiece (14) is machined by means of a machining unit (24) of the clocking cell (16).

15. Method according to claim 13 or 14,
**characterised in that**
in a feeding step (48) the clocking cell (16, 16') is brought into the removal position above the indexing plate (12) and the workpiece (14) is laid into a gripping unit (38) of the indexing plate (12) by means of the receiving unit (18) of the clocking cell (16, 16').

16. Method according to one of claims 13 to 15,
**characterised in that**
the removal step (44), the machining step (46) and/or the feeding step (48) are/is carried out during a stroke of the rotary indexing machine (10).

## Revendications

1. Machine cadencée circulaire
avec au moins un plateau diviseur (12) prévu en au moins un état d'opération pour recevoir et transporter au moins une pièce à travailler (14), et avec au moins une cellule à cadence (16, 16') comprenant au moins une unité de logement (18) avec au moins deux éléments de logement opposées (20, 22), prévus pour un logement conjoint de l'au moins une pièce à travailler (14) du plateau diviseur (12), et comprenant au moins une unité d'usinage (24) pour l'usinage de la pièce à travailler (14) reçue par l'unité de logement (18),
**caractérisée en ce que**
l'au moins une cellule à cadence (16, 16') comprend au moins une unité-pont (26) qui s'étend au moins partiellement à travers le plateau diviseur (12) en direction axiale et qui est prévue pour guider les au moins deux éléments de logement (20, 22) de l'unité de logement (18) dans un système de coordonnées commun, l'unité d'usinage (24) étant disposée sur l'unité-pont (26).

2. Machine cadencée circulaire selon la revendication 1,
**caractérisée en ce que**
l'au moins une unité-pont (26) est prévue pour loger les au moins deux éléments de logement (20, 22) de l'unité de logement (18) d'une telle manière qu'ils sont définiment guidés l'un par rapport à l'autre.

3. Machine cadencée circulaire selon l'une des revendications 1 ou 2,
**caractérisée en ce que**
l'au moins une unité d'usinage (24) est fixement raccordée à l'au moins une unité-pont (26).

4. Machine cadencée circulaire selon l'une des revendications précédentes, **caractérisée en ce que**
l'au moins une unité d'usinage (24) est prévue pour un usinage rotatif de la pièce à travailler (14) reçue par l'unité de logement (18).

5. Machine cadencée circulaire selon l'une des revendications précédentes, **caractérisée en ce que**
l'au moins une unité d'usinage (24) comprend au moins deux outils (28, 30) pour l'usinage de la pièce à travailler (14).

6. Machine cadencée circulaire selon l'une des revendications précédentes, **caractérisée en ce que**
l'au moins une cellule à cadence (16, 16') comprend au moins une unité hydraulique qui est prévue pour un mouvement d'un porteur d'outil (34) de l'au moins une unité d'usinage (24) en travers à un axe rotatif (36) du plateau diviseur (12).

7. Machine cadencée circulaire selon l'une des revendications précédentes, **caractérisée en ce que**
vue dans un plan perpendiculaire à un axe rotatif (36) du plateau diviseur (12), l'au moins une unité-pont (26) présente au moins partiellement une forme de secteur circulaire.

8. Machine cadencée circulaire selon l'une des revendications précédentes, **caractérisée par**
au moins une autre cellule à cadence (16'), qui est réalisée au moins sensiblement identiquement à l'au moins une cellule à cadence (16).

9. Machine cadencée circulaire selon la revendication 8,
**caractérisée en ce qu'**
au moins une des au moins deux cellules à cadence (16, 16') est prévue pour un usinage antécédent et/ou pour un usinage subséquent de l'au moins une pièce à travailler (14).

10. Machine cadencée circulaire selon l'une des revendications précédentes, **caractérisée en ce que**
l'au moins un plateau diviseur (12) comprend au moins une unité de préhension (38) pour recevoir la pièce à travailler (14), qui comprend au moins deux surfaces de préhension (40, 42) ayant des rayons sensiblement différents.

11. Machine cadencée circulaire selon l'une des revendications précédentes, **caractérisée en ce que**
l'au moins une cellule à cadence (16, 16') est réalisée d'une telle manière qu'elle est traversable par rapport au plateau diviseur (12).

12. Cellule à cadence pour une machine cadencée circulaire (10) selon l'une des revendications précédentes,
avec au moins une unité de logement (18) comprenant au moins deux éléments de logement opposées (20, 22) prévus pour un logement conjoint de l'au moins une pièce à travailler (14) du plateau diviseur (12) de la machine cadencée circulaire (10), avec au moins une unité d'usinage (24) pour l'usinage de la pièce à travailler (14) reçue par l'unité de logement (18) et avec au moins une unité-pont (26) qui peut s'étendre au moins partiellement à travers un plateau diviseur (12) d'une machine cadencée circulaire (10) en direction axiale,
l'unité-pont (26) étant prévue pour guider les au moins deux éléments de logement (20, 22) de l'unité de logement (18) dans un système de coordonnées commun, l'unité d'usinage (24) étant disposée sur l'unité-pont (26) et
l'au moins une unité-pont (24) étant prévue pour loger les au moins deux éléments de logement (20, 22) de l'unité de logement (18) d'une telle manière qu'ils sont définiment guidés l'un par rapport à l'autre,
l'unité-pont (26) comprenant au moins deux guidages opposés qui sont respectivement prévus pour guider l'un des au moins deux éléments de logement (20, 22).

13. Procédé en fonctionnememnt d'une machine cadencée circulaire (10) selon l'une des revendications 1 à 11,
**caractérisé en ce que**
dans une étape de prélèvement (44) une cellule à cadence (16, 16') de la machine cadencée circulaire (10) est menée dans une position de prélèvement au-dessus d'un plateau diviseur (12) de la machine cadencée circulaire (10) et une pièce à travailler (14) est enlevée du plateau diviseur (12) par une unité de logement (18) de la cellule à cadence (16).

14. Procédé selon la revendication 13,
**caractérisé en ce que**
dans une étape d'usinage (46) la cellule à cadence (16, 16') est menée dans une position d'usinage à l'écart du plateau diviseur (12) et la pièce à travailler (14) est usinée par une unité d'usinage (24) de la cellule à cadence (16).

15. Procédé selon l'une des revendications 13 ou 14,
**caractérisé en ce que**
dans une étape d'alimentation (48) la cellule à cadence (16, 16') est menée dans la position de prélèvement au-dessus du plateau diviseur (12) et la pièce à travailler (14) est mise dans une unité de préhension (38) du plateau diviseur (12) par l'unité de logement (18) de la cellule à cadence (16, 16').

16. Procédé selon l'une des revendications 13 à 15,
**caractérisé en ce que**
l'étape de prélèvement (44), l'étape d'usinage (46) et/ou l'étape d'alimentation (48) sont exécutées pendant une cadence de la machine cadencée circulaire (10).
